# EUROPEAN PATENT APPLICATION

(11) **EP 1 544 180 A1**
(43) Date of publication of application: **22.06.2005**
(21) Application number: 03728000.5
(22) Date of filing: 25.04.2003
(51) Int. Cl.: C03C 27/06, E06B 3/66, C03C 27/12, B32B 17/06

(54) **GLASS PANEL AND METHOD OF MANUFACTURING GLASS PANEL**

(30) Priority: 12.08.2002 JP 2002234836
(71) Applicant: Nippon Sheet Glass Co.,Ltd., Tokyo 105-8552 (JP)
(72) Inventor: MISONOU, Masao, c/o NIPPON SHEET GLASS CO. LTD., Tokyo 105-8552 (JP); IKEDA, Shunichi, c/o NIPPON SHEET GLASS CO. LTD., Tokyo 105-8552 (JP)
(74) Representative: Blumenröhr, Dietrich
(86) International application number: PCT/JP2003/005411
(87) International publication number: WO 2004/016563

(57) **Abstract**

A glass plate minimizing distortions of reflected images while maintaining a low coefficient of heat transmission is provided. In a glass panel comprising a pair of glass plates (1) arranged to define a void (V) between opposed faces thereof, and a sealing member provided in outer circumference of the pair of glass plates for sealing the void (V), with the void (V) being decompressed, at least one glass plate (1A) of the pair of glass plates (1) has an outer surface bonded to a plate-shaped member in unison through an adhesive layer (X).

## Description

### TECHNICAL FILED

The present invention relates to a glass panel and a method of manufacturing a glass panel, in which the glass panel comprises a pair of glass plates defining a void between opposing faces thereof, and a sealing portion provided in outer peripheries of the pair of glass plates for sealing the void, with the void being decompressed.

### BACKGROUND ART

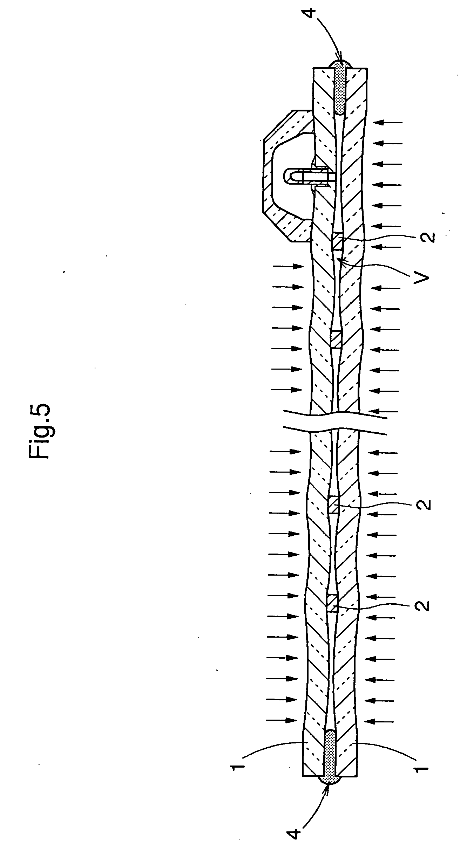

Conventionally, in a glass panel and a method of manufacturing a glass panel of this type, a glass panel as shown in Fig. 5 has been proposed in order to reduce a coefficient of heat transmission and provide a glass panel having an excellent heat insulating performance, in which a void V defined between a pair of glass plates 1 is placed in a decompressed condition at 1.33 Pa (corresponding to 0.01 Torr) or less, for example, by drawing out air acting as a heat transfer medium from the void V. With the decompression, the glass plates 1 are bent in directions to come close to each other by the atmospheric pressure acting on outer surfaces of the glass plates 1. As a result, the glass plates are in danger of contacting each other or becoming damaged. In order to avoid such a danger, numerous spacers 2 are arranged in the void V as spaced from one another along the glass surfaces.

According to the conventional technique for forming the glass panel noted above, it is possible to reduce the coefficient of heat transmission, compared with a single glass plate or what is known as double glazing having a pair of glass plates juxtaposed to define a layer of air therebetween. However, as shown in Fig. 5, the decompression of the void bends the glass plates to large extents in portions other than where supported by the spacers 2 and sealing member 4. Such bending distorts images reflected by the corresponding surfaces of the glass panel, which disadvantageously spoils its aesthetic appearance.

In order to ease this problem, it is conceivable to reduce the bending of the glass plates by increasing the number of the spacers to diminish distances between the supporting points. However, such a measure cannot always completely eliminate the bending, and the presence of the spacers per se tends to be conspicuous and lowers transparency to impair the aesthetic appearance rather than the opposite. Further, an increase in the number of the spacers causes another problem that the spacers act as media to boost heat transfer between the pair of glass plates, thereby to deteriorate (increase) the coefficient of heat transmission.

In order to eliminate the above-noted problem, it may be considered to increase the thickness of the glass plates to improve the strength of the glass plates thereby to restrain the glass plates from bending. However, since the glass plates per se are required to absorb bending, such a method cannot realize a condition free from substantial bending unless the glass plates are formed considerably thick. Moreover, it is difficult to employ such a method in general since special sashes or window frames are required with an increase in the thickness of an entire glass panel, which is not practical.

In view of the above, the object of the present invention is to overcome the above-noted problems and provide a glass panel and a method of manufacturing thereof for minimizing distortions of reflected images while maintaining a low coefficient of heat transmission.

### DISCLOSURE OF THE INVENTION

The first characteristic feature of the present invention lies in a glass panel comprising a pair of glass plates arranged to define a void between opposed faces thereof, and a sealing member provided in outer peripheries of the pair of glass plates for sealing the void, with the void being decompressed, wherein at least one glass plate of the pair of glass plates has an outer surface bonded to a plate-shaped member in unison through an adhesive layer.

According to the first characteristic feature of the present invention, since at least one glass plate of the pair of glass plates has the outer surface bonded to the plate-shaped member in unison through the adhesive layer, the surface of the plate-shaped member may constitute a light reflecting face of the entire glass panel. Thus, even if the outer surface of one of the glass plates is bent, it is possible to prevent distortions of reflected images resulting therefrom.

Specifically, the adhesive layer having fluidity in time of bonding may be freely conformed, in time of bonding, to the surface configuration of an object to be bonded, and thus can fit between one of the glass plates which is bent and the plate-shaped member thereby to bond the two members. As a result, however one of the glass plates is bent, the plate-shaped member may be joined with the glass plates in unison thereby to overcome the disadvantage of unintended distortions of reflected images on the glass panel. In other words, when the plate-shaped member has a flat surface free from distortion, reflected images on the glass panel can also be free from distortion. Of course, if intended distortions are provided on the surface of the plate-shaped member, it is possible to reproduce the intended distortions faithfully in the reflected images on the glass panel.

The heat insulating performance of the pair of glass plates arranged to define the decompressed gap therebetween can be retained intact.

Therefore, it is possible to provide the glass panel which hardly causes distortions of reflected images while maintaining a low coefficient of heat transmission.

Further, when the adhesive layer having excellent malleability after hardening is employed, the glass panel is not easily breakable, thereby to improve the security performance.

Where a refractive index is determined to have substantially the same value for the glass plate and the adhesive layer, unevenness on the surface of the glass plate is hardly prominent.

The second characteristic feature of the present invention lies in that the plate-shaped member comprises a further glass plate.

According to the second characteristic feature of the present invention, in addition to the advantage of performing the functions and effects of the first characteristic feature, the glass panel having a good outward appearance can be manufactured at low cost.

The third characteristic feature of the present invention lies in that the plate-shaped member comprises a resin sheet.

According to the third characteristic feature of the present invention, in addition to the advantage of performing the functions and effects of the first characteristic feature, it is possible to further reduce the shock acting on the pair of glass plates, thereby to further enhance safety. Where the above-noted resin sheet has optical functions, it is also possible to provide new optical functions such as cutting off light having a predetermined range of wavelengths (ultraviolet rays, for example), preventing light reflection and the like.

The fourth characteristic feature of the present invention lies in that the resin sheet comprises a sheet made of polycarbonate.

According to the fourth characteristic feature of the present invention, in addition to the advantage of performing the functions and effects of the third characteristic feature, it is possible to further enhance the security performance and soundproof performance.

The fifth characteristic feature of the present invention lies in that the adhesive layer has fluidity at least in time of bonding.

According to the fifth characteristic feature of the present invention, in addition to the advantage of performing the functions and effects of the first characteristic feature, it is possible to allow the glass panel unit to contact the plate-shaped member more tightly.

The sixth characteristic feature of the present invention lies in that the adhesive layer is formed of an adhesive of reactive hardening type.

According to the sixth characteristic feature of the present invention, in addition to the advantage of performing the functions and effects of the first characteristic feature, it is possible to adjust the hardening time according to a bonding method to be employed in bonding the glass plates together or adjust the bonding strength according to use of the glass panel in a simple way that varies a mixing ratio of components or the like, thereby to carry out a bonding operation and a curing operation with increased efficiency.

The seventh characteristic feature of the present invention lies in that the adhesive layer is formed of a film-like adhesive.

According to the seventh characteristic feature of the present invention, in addition to the advantage of performing the functions and effects of the first characteristic feature, the film-like adhesive undergoes heat treatment between the glass panel unit and the third glass plate to be softened (fluidized), and then the softened adhesive is hardened thereby to form the adhesive layer between the glass plane unit and the third glass plate. As a result, it is possible to manufacture the glass panel more simply.

The eighth characteristic feature of the present invention lies in that the film-like adhesive is made of a vinyl acetate material.

According to the eighth characteristic feature of the present invention, in addition to the advantage of performing the functions and effects of the seventh characteristic feature, it is possible to manufacture the glass panel at low cost.

The ninth characteristic feature of the present invention lies in that the adhesive layer has viscoelasticity.

According to the ninth characteristic feature of the present invention, in addition to the advantage of performing the functions and effects of the first characteristic feature, it is possible, owing to the viscoelasticity of the adhesive layer, to absorb vibrations (including sounds) transmitted from the further glass plate to one of the glass plates or vibrations transmitted from one of the glass plates to the further glass plate, thereby to enhance the sound insulating performance or the soundproof performance of the glass panel.

Further, a shock acting on the glass panel can also be absorbed through the adhesive layer having viscoelasticity, which can enhance the shock-resisting property of the glass panel as well.

The tenth characteristic feature of the present invention lies in that the adhesive layer has a sheet disposed therein.

According to the tenth characteristic feature of the present invention, in addition to the advantage of performing the functions and effects of the first characteristic feature, the sheet functions as a reinforcing member for the adhesive layer and the glass plates to be bonded, thereby to enhance the viscous strength of the glass panel. Also, it is possible to provide the glass panel having excellent security effects.

The eleventh characteristic feature of the present invention lies in that the sheet is made of polycarbonate.

According to the eleventh characteristic feature of the present invention, in addition to the advantage of performing the functions and effects of the tenth characteristic feature, it is possible to further enhance the security performance and soundproof performance.

The twelfth characteristic feature of the present invention lies in a method of manufacturing a glass panel for arranging a pair of glass plates to define a void between opposed faces thereof, sealing outer peripheries of the pair of glass plates, and placing the void in a decompressed condition, wherein a further glass plate is bonded to an outer surface of at least one glass plate of the pair of glass plates through an adhesive having fluidity, and then allowing the adhesive to harden, thereby to join the glass plates in unison.

According to the twelfth characteristic feature of the present invention, after the further glass plate is bonded to the outer surface of at least one glass plate of the pair of glass plates through the adhesive having fluidity, the adhesive is allowed to harden, thereby to join the glass plates in unison. Thus, the further glass plate can be bonded to the pair of glass plates in unison while maintaining the original surface configuration thereof.

Hence, even if one of the glass plates has a bent outer surface, the surface of the further glass plate constitutes a reflecting surface of the entire glass panel, which can prevent distortions of reflected images. Specifically, since one of the glass plates can be bonded to the further glass plate in unison with the adhesive having fluidity, the adhesive is allowed to freely conform to the surface configuration of the object to be bonded, and thus can fit between one of the glass plates which is bent and the further glass plate, thereby to bond the two the plates. As a result, while one of the glass plates with the reflected images being distorted is used, the further glass plate can be joined with one of the glass plates in unison maintaining the original surface configuration thereof, which can overcome the disadvantages of the glass panel relating to the reflected images. Also, the heat insulating performance provided by the pair of glass plates arranged through the decompressed void can remain intact. Thus, it is possible to provide the glass panel which hardly causes distortions of the reflected images while maintaining the low coefficient of heat transmission.

The thirteenth characteristic feature of the present invention lies in a method of manufacturing a glass panel for arranging a pair of glass plates to define a void between opposed faces thereof, sealing outer peripheries of the pair of glass plates, and placing the void in a decompressed condition, wherein a plate-shaped member is bonded to an outer surface of at least one glass plate of the pair of glass plates through a film-like adhesive, and then allowing the adhesive to harden, thereby to join the glass plates in unison.

According to the thirteenth characteristic feature of the present invention, since the film-like member is used as the adhesive, it is possible to manufacture the glass panel more simply which hardly causes distortions of the reflected images while maintaining the low coefficient of heat transmission.

### BRIEF DESCRIPTION OF THE DRAWINGS

Fig. 1 is a partly cut away perspective view showing a glass panel;
Fig. 2 is a sectional view of the glass panel;
Fig. 3 is an exploded perspective view showing a forming condition of the glass panel;
Fig. 4 is a sectional view of the glass panel in another embodiment; and
Fig. 5 is a sectional view of a conventional glass panel.

### BEST MODE FOR CARRYING OUT THE INVENTION

An embodiment of the present invention will be described hereinafter with reference to the drawings. In the drawings, the portions indicated with the same reference numbers or signs as in the conventional art represent the same or corresponding portions.

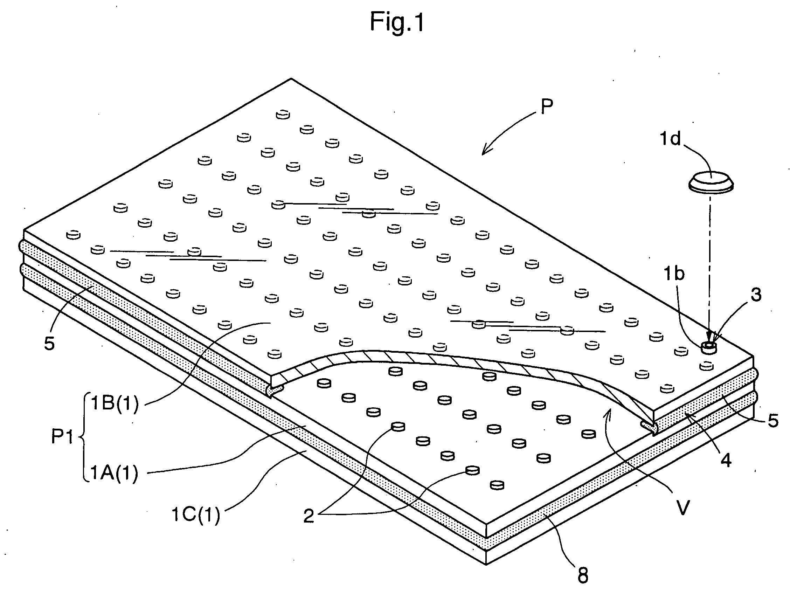

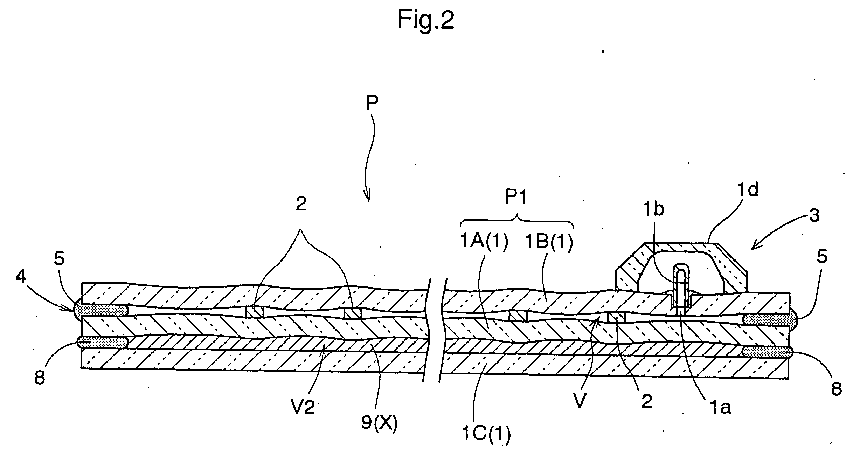

Figs. 1 and 2 show an example of glass panels according to the present invention (hereinafter referred to as the glass panel P). The glass panel P comprises a pair of glass plates 1, numerous spacers 2 arranged as spaced from one another along glass surfaces to place the pair of glass plates 1 vertically opposed to each other across a void V, a metal circumferential sealing member 4 (corresponding to the sealing portion) provided over entire outer peripheries of the glass plates 1, a suction member 3 provided on a second glass plate 1B of the pair of glass plates 1 for decompressing and sealing the void V, through which air is drawn from the void V to seal the void and form a glass panel unit P1, and an adhesive layer X provided on a front surface of a first glass plate 1A of the pair of glass plates 1 of the glass panel unit P1 (corresponding to one of the glass plates) to allow a plate-shaped member to be rigidly bonded to the glass panel unit. The adhesive layer X preferably has fluidity at least in time of bonding. This is because the glass panel unit P1 and plate-shaped member may be bonded together with increased tightness.

In this embodiment, a third glass plate 1C (corresponding to the further glass plate) is shown as an example of the plate-shaped member. The plate-shaped member will be referred to as the third glass plate 1C hereinafter unless otherwise indicated. It is desirable to use the third glass plate 1C as the plate-shaped member since the glass panel having a good outward appearance can be fabricated at low cost.

The first glass plate 1A, second glass plate 1B and third glass plate 1C are float glass plates having the same dimensions (with a thickness of 2.65mm to 3.2mm, for example) and the edges thereof set flush with one another.

The spacers 2 preferably are made of a material having a compressive strength of 490MPa (5000kg/cm²) or more, and are formed of Inconel 718 in this embodiment. If the strength is low, the spacers 2 may be broken by the atmospheric pressure acting on the glass plates 1 to render formation of the void V impossible, and the glass plates may directly contact each other to deteriorate the heat insulating performance of the glass panel per se or damage the glass plates. The spacers 2 have a cylindrical shape 0.3mm to 1.00mm in diameter and 0.2mm in height. With the cylindrical shape, the spacers 2 have a reduced chance of forming corners in portions contacting the glass plates 1 to realize a tender support for the glass plates 1 and prevent the plates from breaking easily. On the other hand, the spacers 2 are arranged longitudinally and transversely at intervals of 20mm along the glass surfaces.

The circumferential sealing member 4 comprises melted low melting point glass 5 placed integrally with and joined to both the glass plates 1A and 1B over entire circumference edges thereof to seal the void V.

Then, the void V is brought to a decompressed condition (1.33Pa (corresponding to 1.0×10⁻²Torr) or less, for example) by a sucking and decompressing operation through the suction member 3.

The suction member 3 will be described next.

As illustrated in Figs. 1 and 2, the suction member 3 includes a suction opening 1a formed in the second glass plate 1B, a suction glass tube 1b fixed to the suction opening 1a, and a cap 1d covering the suction opening 1a and the glass tube 1b from above. The glass tube 1b is heated at a distal end thereof to be completely sealed, with the gas drawn from the void V, and the cap 1d is attached from above, thereby to constitute the suction member 3.

Next, the formation of the glass panel P will be described.

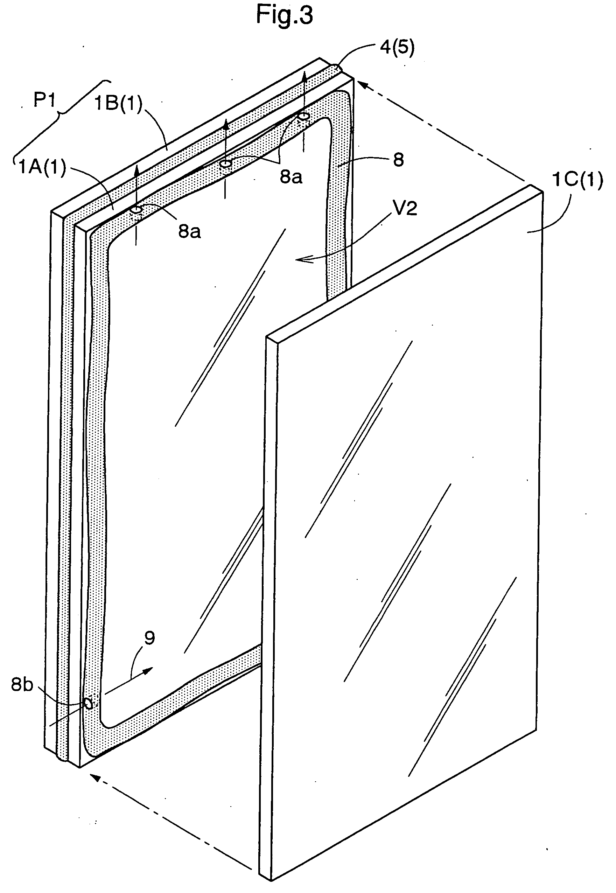

Firstly, the process for forming the glass panel P is as follows.
[1] The pair of glass plates 1 are cut to predetermined dimensions in advance.
[2] The pair of glass plates 1 are joined together with the spacers 2 arranged therebetween and baked with the low melting point glass 5 provided between the pair of glass plates 1 at their circumference, thereby to form the circumferential sealing member 4.
[3] The void V defined between both the glass plates 1 is placed in the decompressed condition by using the suction member 3, thereby to form the glass panel unit P1 having an excellent heat insulating performance.
   The bonding between the glass panel unit P1 and the third glass plate 1C is as follows.
[4] As shown in Fig. 3, the glass panel unit P1 and the third glass plate 1C are vertically arranged with their faces opposed to each other. A second sealing member 8 is formed to seal the outer peripheries of the glass panel unit P1 and the third glass plate 1C through a sealing element made of polyisobutylene in the form of tape or an acrylic joining tape having adhesive layers provided on opposite surfaces thereof or the like. At this time, vent bores 8a are formed in the second sealing member 8 at an upper portion thereof for allowing a second void V2 defined between the glass panel unit P1 and the third glass plate 1C to communicate with an external space of the glass panel P. A filler opening 8b is formed in the second sealing member 8 at a lower portion thereof for filling the second void V 2 with an adhesive 9.
[5] An unillustrated adhesive injecting device is connected to the filler opening 8b to inject the adhesive 9 into the second void V2. The adhesive 9 has fluidity when injected for facilitating the injection, and hardens to form the adhesive layer X between the first glass plate 1A and the third glass plate 1C. Incidentally, the viscosity of the adhesive 9 when injected preferably is 1 to 10mPa · s (millipascal seconds).
   The adhesive 9 may comprise a polymer of an unsaturated monomer of at least one type of cycloalkylester and alkyl or cycloalkylester of methacrylate, or having at least one of those as a main component, for example. As acrylic ester, methyl acrylate or ethyl acrylate may be employed, while as methacrylate ester, methyl methacrylate or ethyl methacrylate may be employed. Concrete examples of other unsaturated monomer capable of copolymerizing with these monomers are vinylester, vinylpyridine, acrylonitrile, methacrylonitrile, butadiene, chloroprene, styrene, vinyltoluene and vinyl acetate. The adhesive desirably is the reactive hardening type.
   Air is drawn from the second void V2 to the outside through the vent bores 8a as the adhesive 9 is injected, which easily prevents air bubbles from mixing into the adhesive filled into the second void.
[6] The adhesive layer X is formed by hardening of the adhesive 9, thereby to form the glass plates 1A and 1C as a unit to constitute the glass panel P.

Where the adhesive layer X has viscoelasticity, it is possible to improve the sound insulating performance and shock-resisting performance of the glass panel P.

With the glass panel P formed as noted above, the first glass plate 1A and the second glass plate 1B are bent by decompression of the void V of the glass panel unit P1. Nonetheless, the adhesive layer X absorbs the bending of the surface of the first glass plate 1A since the third glass plate 1C is bonded to the surface of the first glass plate 1A through the adhesive layer X, which results in the glass panel free from bending of the surface of the third glass plate 1C to provide the glass panel having a good appearance that eliminates distortions of reflected images on the third glass plate 1C. In addition to the excellent insulating performance of the glass panel unit P1 being maintained, the glass panel also has the excellent sound insulating performance and shock resisting performance owing to viscoelasticity of the adhesive layer.

### [Modified Embodiments]

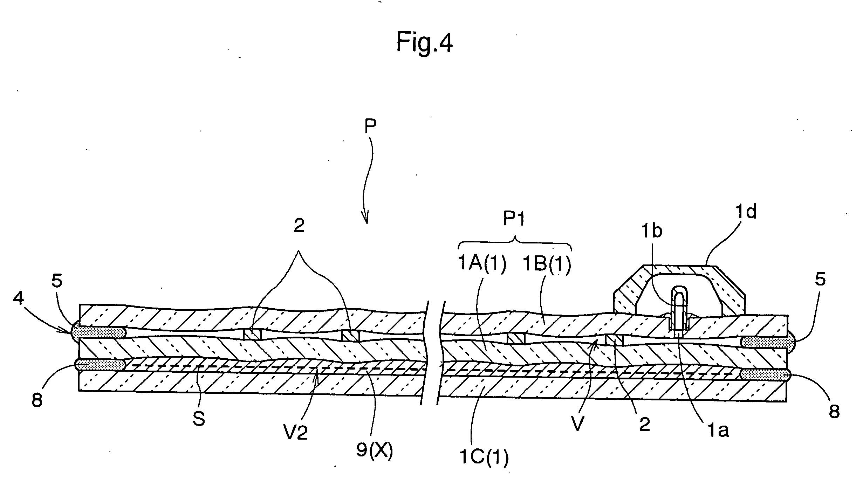

Modified embodiments of the present invention will be described hereinafter.
(1) In the foregoing embodiment, the third glass plate 1C is used as one example of the plate-shaped member bonded to the glass panel unit P1 through the adhesive layer X. However, the glass panel of the present invention is not limited to such a construction. For example, a resin sheet may be bonded to the glass panel unit P1 through the adhesive layer X instead. Where a resin sheet is used as the plate-shaped member, a shock acting on the pair of glass plates 1 can be further reduced thereby to further improve safety. Also, where the above-noted resin sheet has optical functions, it is possible to provide new optical functions such as cutting off light having a predetermined range of wavelengths (ultraviolet rays, for example), preventing light reflection and the like.
   Moreover, the use of a polycarbonate sheet as the resin sheet is preferable since security performance and soundproof performance can be further enhanced.
(2) The glass panel according to the present invention may have a wide variety of uses, e.g. may be used in buildings and vehicles (for windowpanes of automobiles, railway carriages, and ships and vessels), elements of devices (such as surface glass of plasma displays, and doors and walls such as of refrigerators and heat-retaining devices) and the like.
   Further, the decompressed condition of the void V of the glass panel is not limited to 0.13Pa (1.0×10⁻³Torr) or less as described in the foregoing embodiment, but the degree of decompression may be selected as desired.
(3) The thickness of the glass plate is not limited to 2.65mm to 3.2mm as described in the foregoing embodiment, but may be selected otherwise. Also, part or all of the first glass plate 1A, the second glass plate 1B and the third glass plate 1C may be different in thickness to be combined to constitute the glass panel.
   Further, the type of glass may be selected as desired, for example, from among figured glass, obscured glass (having a light diffusing function obtained by surface treatment), net glass, reinforced glass, or sheet glass having a heat-absorbing, ultraviolet-absorbing or heat-reflecting function, which may be used alone or in combination.
   Further, with regard to glass composition, soda silica glass (soda lime silica glass), boric silica glass, aluminosilicate glass, and various types of crystallized glass may be used.
   While the third glass plate 1C is bonded to only the outer surface of the first glass plate 1A through the adhesive layer X in the foregoing embodiment, the third glass plate 1C may be bonded to only the outer surface of the second glass plate 1B through the adhesive layer X, or third glass plates 1C may be bonded to the outer surfaces of both the first glass plate 1A and second glass plate 1B through adhesive layers X. In these embodiments, the third glass plate overlying the suction member 3 may be perforated to receive the suction member 3 therein.
   Still further, as shown in Fig. 4, a sheet S may be disposed in the adhesive layer X. In this case, the sheet S acts as a reinforcing material for the adhesive layer X and the glass plates 1 to be bonded thereby to enhance the viscosity strength of the glass panel. Also, the glass panel having a high security performance can be provided. As the material for the sheet S, polycarbonate is desirable, for example, which further promotes security performance and soundproof performance.
(4) The material for the spacers 3 is not limited to Inconel 718 as described in the foregoing embodiment. Instead, it is possible to use stainless steel, other metals, silica glass, ceramics, glass or low melting point glass, for example, as long as they are not easily deformable by external forces to cause the two glass plates to contact each other.
(5) The material for the circumferential sealing member 4 is not limited to the low melting point glass 5, but may be solder, for example. Such a solder construction may include Sn, Zn, Ti, O or the like, for example, or may use metal materials having one or more of tin, bismuth, lead, zinc, indium, antimony and the like as main components. Further, one or more of silver, aluminum, copper and like may be added. It is particularly preferable if the construction includes Ti of 0.01 to 3.0% by weight, Sn of 72 to 99.9% by weight, Zn of 0.1 to 10.0% by weight and Pb of 0.1% or less by weight which is not substantially contained. In this range, it is most preferable that the ratio of Zn to the total of Sn and Zn is 8 to 10% and Cu is not substantially contained.
(6) The adhesive 9 is not limited to the reactive hardening type noted above in the construction where it fills the second void V defined between the glass panel unit P1 and the third glass plate 1C, but may be the ultraviolet hardening type, for example. In short, any type of adhesive having fluidity in time of bonding may be used.

Further, the adhesive 9 is not limited to the construction noted above to fill the second void V, but may be a film-like member held between the glass panel unit P1 and the third glass plate 1C. In this case, the film-like adhesive undergoes heat treatment between the glass panel unit P1 and the third glass plate 1C to be softened (fluidized). Subsequently, the softened adhesive is hardened thereby to form the adhesive layer X between the glass plane unit P1 and the third glass plate 1C. Thus, it is possible to manufacture the glass panel more easily. It is preferable to use, for example, a film made of a vinyl acetate material as the film-like adhesive, which allows the glass panel to be manufactured at low cost.

Still further, the adhesive 9 is not limited to the reactive hardening type noted above, but may be the ultraviolet ray hardening type, for example. In short, any type of adhesive having fluidity in time of bonding may be used.

While the reference numbers and signs are provided to facilitate comparison with the drawings, such provision does not limit the present invention to the constructions shown in the accompanying drawings.

### INDUSTRIAL UTILITY

The glass panel according to the present invention may have a wide variety of uses, e.g. may be used in buildings and vehicles (for windowpanes of automobiles, railway carriages, and ships and vessels), elements of devices (such as surface glass of plasma displays, and doors and walls such as of refrigerators and heat-retaining devices) and the like. Also, the type of glass may be selected as desired, for example, from among figured glass, obscured glass (having a light diffusing function obtained by surface treatment), net glass, reinforced glass, or sheet glass having a heat-absorbing, ultraviolet-absorbing or heat-reflecting function, which may be used alone or in combination.

## Claims

1. A glass panel comprising a pair of glass plates (1) arranged to define a void (V) between opposed faces thereof, and a sealing member (4) provided in outer peripheries of the pair of glass plates for sealing the void (V), with the void (V) being decompressed,
wherein at least one glass plate (1A) of the pair of glass plates (1) has an outer surface bonded to a plate-shaped member in unison through an adhesive layer (X).

2. A glass panel as defined in claim 1 wherein the plate-shaped member comprises a further glass plate (1C).

3. A glass panel as defined in claim 1 wherein the plate-shaped member comprises a resin sheet.

4. A glass panel as defined in claim 3 wherein the resin sheet comprises a sheet made of polycarbonate.

5. A glass panel as defined in claim 1 wherein the adhesive layer (X) has fluidity at least in time of bonding.

6. A glass panel as defined in claim 1 wherein the adhesive layer (X) is formed of an adhesive of reactive hardening type.

7. A glass panel as defined in claim 1 wherein the adhesive layer (X) is formed of a film-like adhesive.

8. A glass panel as defined in claim 7 wherein the film-like adhesive is made of a vinyl acetate material.

9. A glass panel as defined in claim 1 wherein the adhesive layer (X) has viscoelasticity.

10. A glass panel as defined in claim 1 wherein the adhesive layer (X) has a sheet disposed therein.

11. A glass panel as defined in claim 10 wherein the sheet is made of polycarbonate.

12. A method of manufacturing a glass panel for arranging a pair of glass plates (1) to define a void (V) between opposed faces thereof, sealing outer peripheries of the pair of glass plates, and placing the void (V) in a decompressed condition,
wherein a further glass plate (1C) is bonded to an outer surface of at least one glass plate (1A) of the pair of glass plates (1) through an adhesive having fluidity, and then allowing the adhesive to harden, thereby to join the glass plates in unison.

13. A method of manufacturing a glass panel for arranging a pair of glass plates (1) to define a void (V) between opposed faces thereof, sealing outer peripheries of the pair of glass plates, and placing the void (V) in a decompressed condition,
wherein a plate-shaped member is bonded to an outer surface of at least one glass plate (1A) of the pair of glass plates (1) through a film-like adhesive, and then allowing the adhesive to harden, thereby to join the glass plates in unison.
